# EUROPEAN PATENT APPLICATION

(11) **EP 1 760 666 A1**
(43) Date of publication of application: **07.03.2007**
(21) Application number: 06014859.0
(22) Date of filing: 17.07.2006
(51) Int. Cl.: G07C 5/08, G01F 9/00, G06Q 40/00

(54) **Fuel use categorization for fuel tax reporting on commercial vehicles**

(30) Priority: 24.08.2005 US 211013
(71) Applicant: International Truck Intellectual Property Company, LLC., Warrenville, IL 60555 (US)
(72) Inventor: Larson, Gerald L., Fort Wayne, IN 46804 (US)
(74) Representative: Kuhnen & Wacker

(57) **Abstract**

A motor vehicle equipped with a controller area network supports vehicle management functions which categorize fuel usage by type and location of the vehicle. This allows fuel usage to be allocated between a non-taxable account and taxable accounts for each jurisdiction in which the vehicle is operated.

## Description

### BACKGROUND OF THE INVENTION

### 1. Technical Field:

The invention relates to commercial vehicle management and more particularly to using motor vehicle control electronics to document fuel usage categories and to generate detailed fuel usage reports for State and provincial highway use tax reporting.

### 2. Description of the Problem:

A commercial vehicle's engine provides power for moving the vehicle along public roads but may also be used to support applications unrelated to operation of the vehicle on such roads. The fuel burned to support vehicle operation on a road is subject to fuel taxes. However, for exempt vehicles, fuel used for other purposes may be excluded from taxation and credit may be claimed from governmental authorities upon presentation of acceptable proof of non-taxable use. In addition, knowledge of the apportionment of taxes to particular jurisdictions based on actual fuel used within a jurisdiction may be advantageous to an operator.

A vehicle engine may provide a power source for the generation of electrical, hydraulic and pneumatic power in addition to providing power for moving the vehicle. This electrical, hydraulic and pneumatic power may in turn be variously applied. For example, hydraulic power is often employed for power take-off operations (PTO) such as wrecker winches. Fuel used to operate a winch is arguably not taxable. The vehicle may be driven off public roads in which case none of the fuel burned is taxable. In some cases it may be arguable that fuel burned during extended periods of idling is not taxable. Often non-taxable fuel usage is readily identifiable. One case would be where a vehicle has an auxiliary engine used for a specialized, non-motive function such as running a refrigerator pump. Here fuel flow to the auxiliary engine is readily tracked and excluded from tax. However, determining the proportion of fuel consumed by a primary power plant when it is used to support a function which is auxiliary to operation of the vehicle is typically more complex.

As vehicles move across State and provincial boundaries the authority to whom tax is owed changes. The determination of which jurisdiction a vehicle is in is readily supported by use of geographic positioning systems (GPS) to find the vehicle's location. Electronics based, fuel tax reporting systems adapted to determining jurisdiction for allocating fuel taxes are known.

A number of factors complicate the measurement of fuel used for taxable and non-taxable purposes. Controllers for diesel engines typically measure fuel mass flow. However, taxation of fuel is based on the volume of fuel used, not the mass used. The formula for converting mass to volume does not have fixed value parameters. For example, summer and winter blends of fuel are formulated to vary volatility of the fuel, with lighter distillates being used more in the winter, and heavier, middle distillates being used more in the summer. Engine fuel flow measurement, which is designed to determine mass of the fuel used, will produce differing results, when equated to volumetric equivalents, for equal masses depending upon the blend of the fuel used.

Worse, fuel flow measurement errors tend to be cumulative. On the other hand, fuel level sensors used in tanks can be made highly accurate, but even the best such devices have a margin of error of a sixteenth of an inch. While over a long period of operation measurement errors should cancel out, measurements taken over short periods are subject to a high degree of uncertainty. PTO operation of the vehicle may come in 10 to 20 minute bursts. The fuel level change in the fuel tank over so short a period may be less than the margin of error of the sensor, introducing a high degree of uncertainty in the volume of fuel used. A fuel flow device, allowing for the possibility of error already described, is a more reliable instrument over short periods than a fuel level sensor but can exhibit systematic, cumulative error for repeated operations.

What is desirable is the refinement, integration and extension of such systems to provide detailed fuel usage reports, both for improving vehicle and fleet management, and for assuring that accurate amounts are paid for taxes.

### SUMMARY OF THE INVENTION

According to the invention there is provided a vehicle management system for categorizing fuel usage, particularly for categorizing fuel usage for purposes of taxation and documenting claims for tax exempt use. The vehicle management system comprises a first data link installed on the motor vehicle. An engine sensor group monitors engine operating variables and returns values for those variables, including fuel flow, to an engine controller. The engine controller is coupled to the engine sensor group for receiving the reported engine operating variables and is responsive to these for generating fuel rate usage messages. The engine controller is connected to the first data link and puts the fuel rate usage messages and selected engine operating values on the first data link. A body controller, which has access to the first data link, reads the fuel rate usage messages. The body computer compares vehicle location information with public right-of-way location information to categorize usage as non-taxable if the vehicle is off public right-of-ways. The body computer includes further programming responsive to the engine operating variable values reported on the first data link, and other inputs, for determining whether the engine is idling and, if so, for how long it has idled. The body computer is programmed to be further responsive to determination that the engine has idled for a first minimum period for categorizing further use of fuel as non-taxable for as long as the engine continues to idle. The body computer may also be programmed to respond to data link messages indicating power take-off operation and other accessories have been engaged for allocating a portion of fuel usage as non-taxable.

Additional effects, features and advantages will be apparent in the written description that follows.

### BRIEF DESCRIPTION OF THE DRAWINGS

The novel features believed characteristic of the invention are set forth in the appended claims. The invention itself however, as well as a preferred mode of use, further objects and advantages thereof, will best be understood by reference to the following detailed description of an illustrative embodiment when read in conjunction with the accompanying drawings, wherein:

Fig. 1 is a schematic of a telematics systems adapted for vehicle position locating and centralized data collection.

Fig. 2 is a block diagram of fuel using vehicle components and a controller area network based control system adapted for use in the data generation and collection as it relates to vehicle management and fuel usage categorization.

Fig. 3 is a simplified flow chart related to vehicle onboard data collection and reporting.

### DETAILED DESCRIPTION OF THE INVENTION

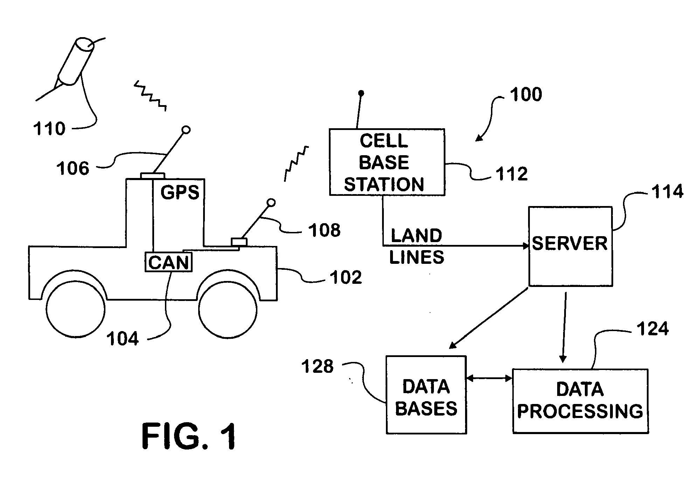

Referring now to the figures and in particular to Fig. 1, a generalized vehicle telematics system 100 is illustrated. Vehicle telematics system 100 may be implemented using one or a fleet of commercial vehicles 102. A vehicle 102 communicates with a vehicle operations server 114 using any convenient means, but typically using a cellular telephone 108 to link with a cellular base station 112. Cellular base station 112 provides land line links to server 114.

Commercial vehicle 102 includes an electronic control system based on a controller area network (CAN) system 104. Controller area network system 104 links numerous controllers onboard commercial vehicle 102 for data communication and allows central activation and control of remote data communications services through cellular phone link 108. Controller area network 104 has a node which incorporates a global positioning system unit 106 for determining a vehicle's location from the constellation of GPS satellites 110.

Cell phone base station 112 is linked by land lines including, if advantageous, the internet, to transfer data from cell phone link 108 to a vehicle operator's server 114. The data from the vehicle 102 can include, as set forth in detail below, information relating to engine loading, fuel flow and other vehicle operating variables collected by the CAN system 104 as well as information specifying the vehicle's location. Records forwarded from vehicle 102 can be readily time, date, location and mileage stamped if required to document factors supporting a demand for the refund of payment of fuel taxes.

In a preferred embodiment of the invention, server 114 maintains databases 128 of fuel usage indicating amounts used (or in increments of predetermined volume), the character of the use and the location of use (e.g. on or off a public highway, or in which jurisdiction). Alternatively, these records may be maintained on onboard computers installed on the vehicles. The location of use determinations may be made by reference to a database package including a geographic information system (GIS) database. GIS databases are available which specify the location of public roads. Alternatively, a GIS database may be accessed over a network link. Whether a GIS database is maintained on the vehicle, on a central server, or is accessed by the central server may depend upon the licensing terms available for the particular GIS databases consulted. A data processing system 124 associated with server 114 can provide for database update and interrogation. Similar facilities may be provided on vehicle 102. In addition, the databases 128 may indicate minimum power requirements for the operation of vehicle accessories.

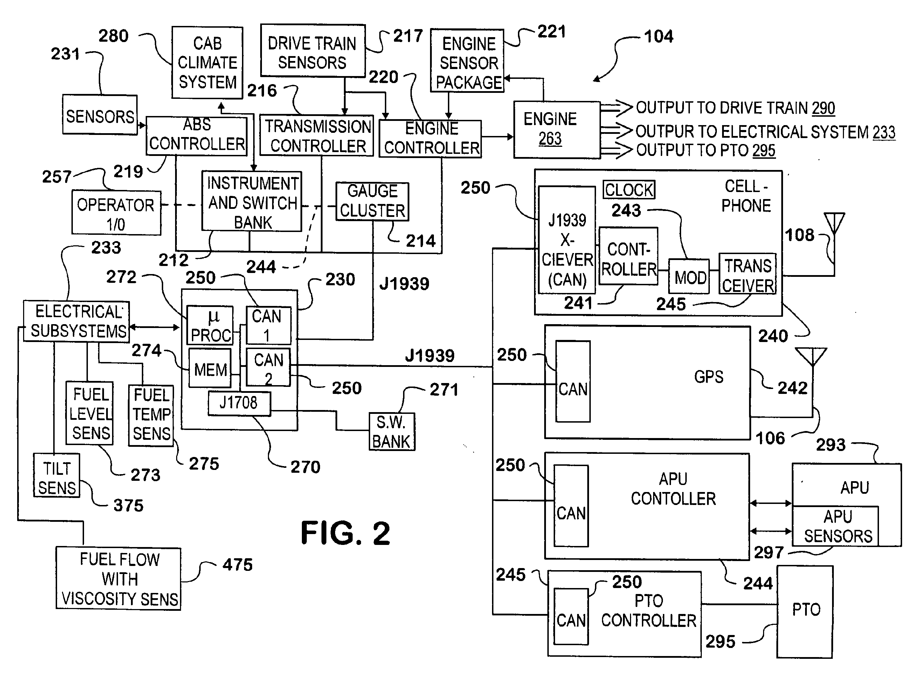

Referring now to Fig. 2, the features of a controller area network system 104 such as used on a commercial vehicle are set out. Controller area network 104 has a programmable body computer (sometimes referred to as an electronic system controller (ESC) or body controller) 230 based on a microprocessor 272 and memory 274. Microprocessor 272 communicates with other parts of the programmable body computer 230 over a conventional bus. Memory 274 includes both volatile and nonvolatile sections (not shown), and may be programmed with databases 128 including the GIS database detailing locations of public right of ways instead of using a centralized server. The use of GIS data for comparison against positional information depends upon an accurate determination of the location of the vehicle. Such accuracy can be provided by enhanced global positioning system data, which can be used to determine location to within 3 meters. Most of the time this is sufficient precision and accuracy to determine if the vehicle is on a public right of way. Memory 274 may also be programmed with power requirements for accessory equipment installed on the vehicle, which allows the microprocessor to allocate fuel consumption to this equipment. When reports are received over either of two J1939 busses that particular equipment is engaged microprocessor 272 refers to databases for the power consumption for the particular accessory.

Among the other parts of the microcomputer 230 are input/output devices for handling on board communications between controllers including first and second controller area network (CAN) interfaces 250 and a SAE J1939 or J1708 interface 270 (shown connected to switch bank 271). Microprocessor 272 may also directly control features of electrical subsystems 233. Here the electrical subsystems 233 may include one or more sources of precision fuel property measurements such as taken from an ultrasonic fuel tank level sensor 273, a fuel flow and viscosity sensor 475, or a fuel temperature sensor 275. In addition, a vehicle mounted tilt/road grade sensor 375 may be provided for adjusting or preventing use of measurements from a fuel tank level sensor 273. Where an ultrasonic fuel tank level sensor 273 is employed, programming of the body computer 230 will provide for time averaging of the data to filter out variation in level due to slosh of fuel in a fuel tank (not shown). Fuel level sensors can also be conventional types or capacitive types. An engine external fuel flow and viscosity sensor 475 communicating with body computer 230 may also be used.

The engine controllers 220 used with diesel engines 263 typically provide a measurement of fuel flow based upon engine speed, injection pressures, fuel charge shaping generated by the engine controller based upon operating conditions and assumed fuel temperature under stabilized conditions. The engine sensor package 221 may include a highly accurate turbine flow meter. Accurate knowledge of system oil pressure can be used to determine more precisely and accurately the probable range of fuel volume injected by an injector and better knowledge of viscosity (as a function of fuel temperature) allows more precise determination of restriction. Generally, fuel flow is best measured under "stable conditions". Values for engine operating variables indicating stable oil and fuel temperature are good indicators of such "stability". The fuel rate signal is directly proportional to fuel mass flow though the parameters of the functional relationship may vary. There are accuracy problems with measuring fuel flow in this way. Precision instruments such as ultrasonic fuel tank level sensor 273 and a fuel temperature sensor 275 can provide greater accuracy in measurement of fuel flow up to the limit of economic justification. However even the best of these systems suffer from a lack of precision which makes short duration fuel usage measurement problematical. However, by allowing calibration of fuel mass flow sensors provided with engine sensor package 221 using accurate, long term fuel use measurement from level sensors, improved accuracy of flow rate can be obtained. Using the fuel temperature and viscosity measurements combined with indicated flow from a turbine flow meter can give highly accurate fuel flow measurements when calibrated.

Given a long enough operating period, the fuel rate signal may be calibrated and proportioned to fuel volume usage. Such calibration is done using a fuel level sensor 273 and takes place over an operational period long enough to produce a change in fuel level much larger than the margin of error of the fuel level sensor. As noted above, errors in fuel flow produced by engine controllers tend to accumulate. Those produced by a fuel level sensor 273, on the other hand, tend to cancel over time. Thus, well calibrated fuel flow calculations will provide highly accurate short term measurements of fuel usage. Calibration is done under stable engine operating conditions, indicated by stable engine oil and fuel temperature readings.

The economic justification for highly accurate fuel usage determination stems largely from the potential tax savings available. Tax savings will depend in turn on the number of auxiliary tasks imposed on a vehicle prime mover, from the presence of auxiliary engines which draw fuel from the same fuel tank as the vehicle engine 263, or from frequent use of the vehicle off public roads. Consider a situation where measurements of fuel flow can be assured to be within 5% accuracy. It is probable that the amounts of fuel excluded from road use taxation will have the lowest level which is known with high assurance to have been used for non-taxed activities. Thus the greater the assured accuracy, the greater the tax savings. However, accuracy has its own price in terms of expense in equipment. For example, fuel flow turbines are frequently inaccurate at extremely low flow rates (the turbine can simply stop turning). The more expensive the turbine generally the broader its range of accurate operation. Fuel rate can be combined with other engine operating variables to determine power output and load. Multiple sources of fuel flow information (e.g. changes in fuel level averaged over time versus direct measurement) can be used for calibration. Alternatively, these systems can be calibrated by measurement against known quantities before putting the vehicle into the field. What is preferred though is to use highly accurate, but temporally low resolution, fuel level sensors periodically to calibrate fuel flow measurement under stable operating conditions. For example, once stable operating conditions are established, and under circumstances where an operator expects an extended period of uninterrupted operation, a calibration operation begins. Fuel level is sensed, and for an extended period fuel flow is sampled. At the end of the period fuel level is again sensed. Fuel usage is the integral of a fuel flow, and particular flow rates can be adjusted to reflect their proportion contributed to fuel used as measured by the level sensors. Repeated calibration is required to compensate for changes with use in the equipment and seasonal and geographic variation in fuel blends. Where fuel flow is not directly reported, engine load may be estimated as a precursor to estimating fuel flow. Systematic errors in measurement of engine load are minimized by improved accuracy in fuel flow estimation or measurement by adjusting for fuel temperature, hydraulic injector pressure and using engine external flow sensors.

Microprocessor 272 is readily programmed to monitor the proportion of the total load on engine 263 contributed by different vehicle subsystems, so long as the equipment is OEM equipment. Examples of such equipment can be PTO hydraulic pumps or climate control system 280 pumps and fans. The loads imposed on engine 263 may be stored in memory 272 in lookup tables or expressed as a function. Air conditioning compressor pumps are typically on or off, and when on, impose a fixed, and known, load on the engine. Operational status of the devices such as an A.C. pump are readily reported on a J1939 bus. The load represented by such a device is readily stored as an entry in a look up table where the input argument is simply identification of the device. In more advanced, electrically powered cab climate systems 280 or refrigeration systems, the cooling pump may run constantly but vary in output based on exogenous variables, such as the difference between a desired cab temperature and outside air temperature. This sort of varying load may be stored as a series of values in a look up table dedicated to the device and using temperature difference as an input argument.

Fuel flow to engine 263 is either allocated to particular purposes based on the loads imposed on the engine, or it is directly measured if to an auxiliary engine or other direct user of fuel other than the primary engine 263. CAN system 104 includes two distinct controller area networks based on a first bus using the public codes of the Society of Automotive Engineers (SAE) standard for J 1939 networks and a second bus on which manufacturer defined codes are used. The public bus connects first CAN interface 250 to a plurality of system controllers including an instrument and switch bank 212, a gauge cluster 214, an anti-lock brake system controller 219, a transmission controller 216 and an engine controller 220. Any of these controllers may in turn be connected to one or more sensors, or to sensor packages, associated with a specific controller. For example, ABS controller 219 collects data from sensors 231 which include at least the wheel speed sensors used for determining skidding. Transmission controller 216 may track transmission fluid levels or include a drive shaft tachometer from drive train sensors 217. By far the most important collection of sensors though is the engine sensor package 221 connected to the engine controller 230 which includes an engine tachometer and an air intake temperature gauge (providing a reasonable surrogate for ambient temperature). These and other readings may be used for sophisticated assessments of engine loading and when combined with throttle position indication are used to calculate fuel flow. Fuel mass flow is then provided by engine controller 220 to a fuel injection system and back to body computer 230 which equates it volume usage.

A second CAN network provides for connections to a group of controllers not critical to direct vehicle operation, but which control auxiliary loads on engine 263 or control equipment which independently taps the vehicle's fuel reservoir, or provide information used to implement an embodiment of the invention. Shown attached to body computer 230 over CAN interface 250 are a GPS receiver unit 242, an auxiliary power unit controller 244, a cell-phone transceiver unit 240 and a power takeoff operation (PTO) controller 245. Each of these controllers include a CAN interface 250 allowing exchange of data with the microprocessor 230 as well, in theory, with each other. Transceiver unit 240 includes a microcontroller 241, a modulating unit 243 and a transceiver unit 245 connected to an antenna 247 and provides for communications with a remote server such as described in connection with Fig. 1. Body computer 230 has access to data such as mileage and to clock information, as well as GPS data from GPS unit 242, allowing the body computer to stamp data records as to time, date, mileage and location. WAAS GPS is accurate to three meters or better currently, and is expected to improve, allowing for highly reliable determination of vehicle location relative to public thoroughfares. WAAS GPS may be coupled with an on board dead reckoning system implemented by programming of the body computer 230 and operating on individual wheel speed signals provided by the ABS controller 219. Wheel speed equates to vehicle speed and variation in wheel speed equates with turning. When available, GPS allowing continual calibration of the dead reckoning system so that if the GPS system becomes unavailable for a time, dead reckoning may be used to track the position of a vehicle.

A vehicle may be equipped with an auxiliary engine or auxiliary power unit 293 which may consume fuel from the same reservoir as engine 263. Fuel flow to an auxiliary power unit 293 is easily monitored by an APU sensor package 297 and an APU controller 244, which reports fuel usage by APU 293 on the second CAN bus for receipt by body computer 230. Vehicles such as wreckers come with PTO 295 capability, typically powered by a hydraulic pump run off the vehicle's power or drive train 290. Loading the drive train 290 PTO in turn loads the engine. In the case of a wrecker, it may be called upon to generate considerable power output to load a large, disabled automobile at a location on a public highway. All fuel flow reported by an engine sensor package 221 under these circumstances should qualify as non-taxable.

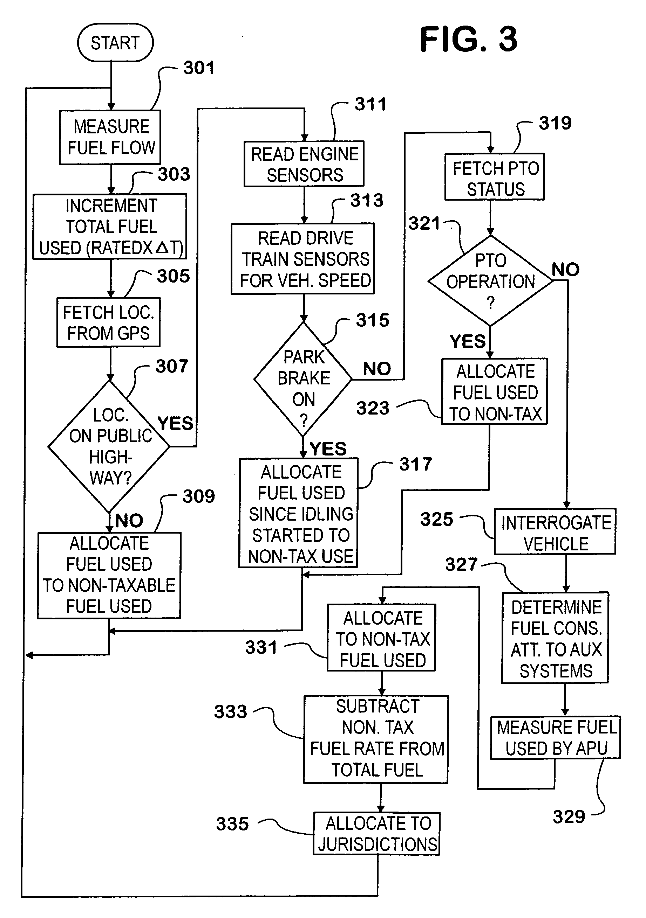

The flow chart of Fig. 3 illustrates a possible method for the collection and categorization of data. These steps may be entirely local to vehicle 102 or split between the vehicle and remote server 114. With the vehicle engine 263 or APU 293 running, fuel flow is measured at step 301. Where fuel flow is determined from changes in fuel level, this step may consist of several subsidiary steps. Where a tilt sensor is available a tilt measurement for the vehicle is taken coinciding in time with the level measurement. Tank geometry is then taken into account to equate the level sensor signal with a corrected level indication. The result is then stored for later use. This event can be programmed to occur at regular time intervals, for example 5 seconds, to give reasonable estimates of how fuel is being used. The elapsed time since the last measurement is multiplied against the fuel flow rate measurement to generate a value for fuel used which is used to increment total fuel used (step 303).

At this point categorization, or proportional allocation, of the latest increment to fuel used as taxable or non-taxable may be done. In this example, this begins by fetching (step 305) location from the GPS unit 242. At step 307 location is compared with data from a geographic information system database. If the vehicle's current location is on a public thoroughfare, the process continues to more particularly categorize fuel usage (the YES branch). If vehicle 102 is not on a public thoroughfare all fuel consumed may immediately be categorized as non taxable (step 309 along the NO branch from step 307) and program execution may be returned for the next sample. The GIS may be locally stored or remotely accessed through server 114.

Following the YES branch from step 307 fuel usage is categorized by its character rather than by its location to determine taxability. Where to begin such categorization is largely arbitrary, and a number of possible algorithms may be employed. Here it has been chosen to determine first if the engine 263 is idling as may be indicated by the park brake being set with the engine running. Alternatively, engine sensors 311, such as the engine tachometer are read. Vehicle speed is then obtained from a drive train tachometer 217, as indicated at step 313. Both tachometer readings are placed on the CAN 1 bus by engine controller 220. Where the vehicle is not moving, has not moved for a minimum period and the engine output is low, as determined at step 315, it may be taken that the vehicle is idling and that fuel consumed may be excluded from taxation. Total fuel expended idling is shown as allocated to non-taxable use at step 317 following the YES branch from decision step 315. The total may be tracked as a monitor of driver performance, particularly where company policy or environmental law restrict idling periods.

If the vehicle is not idling, the NO branch is followed from step 315 to step 319 to fetch PTO status. In most PTO applications the vehicle is typically stopped, and it is assumed, for purposes of example, that such is the case here. Following determination that PTO is engaged at step 321 the YES branch is taken to step 323 and all fuel usage is categorized as non-taxable.

A vehicle may operate on a public road while the engine 263 supports another load which contributes to fuel consumption. For example, the vehicle may be hauling product that is required to be kept refrigerated. Fuel expended to support such a load may not be taxable. Fuel may be expended to regenerate a catalytic converter or particulate trap. Fuel used in this way may also not be taxable. Any number of examples can be thought of. In addition, commercial vehicles may operate in more than one state, province, or other tax jurisdictions. Steps 325, 327 relate to auxiliary vehicle functions unrelated to generation of motive power. At step 325 the vehicle's auxiliary systems are "interrogated" by monitoring the appropriate messages available to body computer 230 over the CAN 1 and CAN 2 networks. Database data may be used to attribute fuel usage to functions indicated as engaged if measurement or estimation of fuel usage attributable to the function is not available. An example of a system for which fuel usage can be directly measured is considered next with processing shown as advancing to steps 329 where measurement of fuel usage by an APU is attributed to the non-taxable category. Step 331 relates to handling of the allocation of fuel used by both auxiliary systems and the APU 293. Finally, all non-taxable uses are subtracted from total incremental use at step 333. At step 335 the current jurisdiction is determined from the GPS data and the balance found at step 333 is allocated to that jurisdiction's taxable total.

While the invention is shown in only a few of its forms, it is not thus limited but is susceptible to various changes and modifications without departing from the spirit and scope of the invention.

## Claims

1. A motor vehicle management system comprising:
a first data link installed on the motor vehicle;
an engine installed on the motor vehicle;
fuel usage related sensors and means for placing fuel usage reports on the first data link;
data processing means having access to the first data link for reading fuel usage reports;
means coupled to the data processing means for supplying vehicle location information;
a data base accessible to the data processing means supplying public right-of-way location information; and
the data processing means including programming for execution on the vehicle body computer for determining incremental fuel usage and further programming for execution for comparing vehicle location information to the public right-of-way location information to determine if the vehicle is off a public right-of-way and to allocate any incremental fuel usage occurring when the vehicle is off a public right-of-way to a non-taxable category.

2. A motor vehicle management system as set forth in claim 1, further comprising:
the fuel usage sensors including an engine sensor group for monitoring engine operation and reporting values for engine operating variables including fuel flow related variables; and
an engine controller coupled to the engine sensor group for receiving the reported values for engine operating variables and responsive to the values for generating fuel mass flow estimates, the engine controller being connected to the first data link for placing fuel mass flow estimate messages on the first data link as fuel usage reports.

3. A motor vehicle management system as set forth in claim 1, the fuel usage sensors further comprising:
a fuel tank level sensor coupled to the data processing means;
a vehicle tilt sensor coupled to the data processing means; and
a fuel tank volume profile related to vehicle tilt coupled to the data processing means.

4. A motor vehicle management system as set forth in claim 2, further comprising:
the engine controller reporting engine operating variables on the first data link;
the data processing means including programming responsive on execution to the engine operating variables reported on the first data link for determining whether the engine is idling and, if so, for how long; and
the data processing means being programmed to be further responsive to determination that the engine has idled for a first minimum period for categorizing further use of fuel as non-taxable as long as the engine continues to idle.

5. A motor vehicle management system as set forth in claim 4 for a vehicle equipped for a power takeoff operation application, the data integration system further comprising:
a power takeoff operation controller for monitoring and initiating operation of the power takeoff application and coupled to the data processing means for reporting operation of a power takeoff application; and
the data processing means being responsive to reported power takeoff operation of the vehicle for allocating fuel usage to non-taxable uses.

6. A motor vehicle management system as set forth in claim 4 for a vehicle equipped with an auxiliary power unit, the data integration system further comprising:
an auxiliary power unit controller for monitoring and initiating operation of the auxiliary power unit and coupled to the data processing means for reporting operation of the auxiliary power unit and fuel flow attributable to such operation; and
the data processing means being responsive to reported operation of the auxiliary power unit for allocating fuel usage attributable to non-taxable use.

7. A motor vehicle management system as set forth in claim 4, further comprising:
the first data link being a public vehicle controller area network;
the data processing means being a vehicle body computer;
the body computer and the engine controller being coupled for communication over the public vehicle controller area network;
a private vehicle controller area network; and
communication and position locating facilities being coupled to the vehicle body computer over the private controller area network.

8. A motor vehicle management system as set forth in claim 7, further comprising:
an auxiliary power unit controller for monitoring and initiating operation of the auxiliary power unit and coupled to the data processing means for reporting operation of the auxiliary power unit and fuel flow attributable to such operation;
the data processing means being responsive to reported operation of the auxiliary power unit for allocating fuel usage attributable to non-taxable use;
a power takeoff operation controller for monitoring and initiating operation of the power takeoff application and coupled to the data processing means for reporting operation of a power takeoff application; and
the data processing means being responsive to reported power takeoff operation of the vehicle for allocating fuel usage to non-taxable uses.

9. A motor vehicle management system as set forth in claim 8, further comprising:
the vehicle body computer being programmed to subtract all non-taxable uses from total use and to categorize an incremental remainder as taxable; and
the vehicle body computer being programmed to determine from location information the jurisdiction in which the vehicle is located and to allocate the incremental remainder to the taxable total for that jurisdiction.

10. A motor vehicle management system as set forth in claim 9, further comprising:
the body computer being further programmed to monitor operation of subsidiary vehicle systems energized directly or indirectly by operation of the engine and responsive thereto, determining fuel usage allocable to operation of the subsidiary vehicle systems for categorization as non-taxable uses.

11. A vehicle comprising:
an engine;
sensors for monitoring operating variables for the vehicle and generating signals indicating values for the operating variables;
data processing means coupled to the sensors and responsive to the signals generated thereby for determining fuel flow to the engine;
means for determining vehicle location coupled to the data processing means to supply periodically to the data processing means coordinate values for instantaneous vehicle location;
a database accessible to the data processing means providing coordinates for public roads; and
the data processing means being further programmed to compare coordinate values for instantaneous vehicle location and coordinates for public roads for determining whether the vehicle is off public roads.

12. A vehicle as set forth in claim 11, further comprising:
the data processing means being responsive to location of the vehicle off public roads for allocating fuel usage by the vehicle to non-taxable use as long as the vehicle remains off public roads.

13. A vehicle as set forth in claim 12, further comprising:
the data processing means being further programmed to monitor the operating variables to determine if the vehicle has started idling; and
the data processing means being further responsive to determination that the vehicle has started idling to allocate further fuel use to non-taxable use.

14. A vehicle as set forth in claim 13, further comprising:
a power takeoff application drawing power for operation from operation of the engine;
a controller for the power takeoff application; and
the data processing means being coupled to receive data from the controller for the power takeoff application and being responsive to said data for allocating fuel flow to the engine supporting power takeoff operation to non-taxable use of the fuel.

15. A vehicle as set forth in claim 13, further comprising:
an auxiliary power unit drawing fuel from the vehicle;
a controller for the auxiliary power unit; and
the data processing means being coupled to receive data from the controller for the auxiliary power unit and being responsive to said data for allocating fuel flow to the auxiliary power unit to non-taxable use.

16. A vehicle as set forth in claim 13, further comprising:
a plurality of subsidiary systems operation of which is unrelated to moving or controlling movement of the vehicle;
controllers relating to the plurality of subsidiary systems and coupled to the data processing means for indicating operation of the plurality of subsidiary systems to the data processing means; and
the data processing means being programmed to allocate a portion of fuel use related to operation of the subsidiary systems to non-taxable use.

17. A vehicle as set forth in claim 13, further comprising:
a power takeoff application drawing power for operation from operation of the engine;
a controller for the power takeoff application;
the data processing means being coupled to receive data from the controller for the power takeoff application and being responsive to said data for allocating fuel flow to the engine supporting power takeoff operation to non-taxable use of the fuel;
an auxiliary power unit drawing fuel from the vehicle;
a controller for the auxiliary power unit;
the data processing means being coupled to receive data from the controller for the auxiliary power unit and being responsive to said data for allocating fuel flow to the auxiliary power unit to non-taxable use;
a plurality of subsidiary systems operation of which is unrelated to moving or controlling movement of the vehicle;
controllers relating to the plurality of subsidiary systems and coupled to the data processing means for indicating operation of the plurality of subsidiary systems to the data processing means; and
the data processing means being programmed to allocate a portion of fuel use related to operation of the subsidiary systems to non-taxable use.

18. A vehicle as set forth in claim 17, further comprising:
the data processing means being further responsive to the coordinates for location for determining the jurisdiction in which the fuel was used and allocating fuel use not allocated to a non-taxable use to a taxable account for that jurisdiction.

19. A vehicle as set forth in claim 13, further comprising:
the data processing means tracking fuel usage categorized as relating to idling of the engine in a distinct account.
